(19) Europäisches Patentamt
European Patent Office
Office européen des brevets

(11) **EP 4 109 140 B1**

(12) **EUROPEAN PATENT SPECIFICATION**

(45) Date of publication and mention
of the grant of the patent:
**29.07.2026 Bulletin 2026/31**

(21) Application number: **22179751.7**

(22) Date of filing: **17.06.2022**

(51) International Patent Classification (IPC):
**G01V 1/20** *(2006.01)*    **G10K 11/00** *(2006.01)*
**G01S 7/521** *(2006.01)*    **B63B 21/66** *(2006.01)*

(52) Cooperative Patent Classification (CPC):
**G01V 1/201; G01S 7/521; G10K 11/008;**
B63B 21/66; G01V 2001/205

(54) **A CASING FOR A TOWABLE SONAR APPARATUS AND A METHOD OF MANUFACTURING A CASING FOR A TOWABLE SONAR APPARATUS**

GEHÄUSE FÜR EIN SCHLEPPBARES SONARGERÄT UND EIN VERFAHREN ZUM HERSTELLEN EINES GEHÄUSES FÜR EIN SCHLEPPBARES SONARGERÄT

BOÎTIER POUR UN APPAREIL DE SONAR REMORQUABLE ET PROCÉDÉ DE FABRICATION D'UN BOÎTIER POUR UN APPAREIL DE SONAR REMORQUABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2021 GB 202108892**

(43) Date of publication of application:
**28.12.2022 Bulletin 2022/52**

(73) Proprietor: **Thales Holdings UK Plc**
**Reading, Berkshire RG2 6GF (GB)**

(72) Inventor: **HARDIE, David J W**
**Reading, RG2 6GF (GB)**

(74) Representative: **Marks & Clerk LLP**
**15 Fetter Lane**
**London EC4A 1BW (GB)**

(56) References cited:
EP-B1- 2 279 435          WO-A1-2014/053983
NO-B1- 339 390            US-A- 2 708 742
US-A1- 2007 201 307       US-A1- 2019 004 196
US-B2- 8 644 109

• SEYFIPOUR IMAN ET AL: "Solution for safety evaluation of offshore pipelines over depressions", SHIPS AND OFFSHORE STRUCTURES, vol. 11, no. 8, 16 November 2016 (2016-11-16), United Kingdom, pages 905 - 912, XP093198918, ISSN: 1744-5302, Retrieved from the Internet <URL:https://www.tandfonline.com/doi/pdf/10.1080/17445302.2015.1099223> [retrieved on 20240827], DOI: 10.1080/17445302.2015.1099223

**Description**

CROSS-REFERENCE TO RELATED APPLICATIONS

This application is based upon and claims the benefit of priority from prior United Kingdom Application number 2108892.7 filed on June 21, 2021.

FIELD

The present disclosure relates to a casing for a towable sonar apparatus and a method of manufacturing a casing for a towable sonar apparatus.

BACKGROUND

A sonar array uses sound propagation in water for purposes such as navigation, detection of objects, mapping or communication for example. For example, sonar systems may be used for seismic arrays for oil and gas offshore surveys.

A sonar apparatus may comprise an array of acoustic sensors that generate an electrical signal in response to a received acoustic signal. In an active sonar system, the sensor components both transmit and receive acoustic signals. Acoustic transducers are an example of a component that can generate and receive acoustic signals. In a passive sonar system, the sensors only receive acoustic signals. A sonar system may be configured as a towed array sonar apparatus, in which a series of sensors are towed behind a vessel on a cable.

Movement of water around the sonar system can be a source of noise in the sonar system. For example, movement of a towed sonar apparatus through water can be a source of noise. The movement through the water creates a turbulent boundary layer around the array. This turbulent flow results in pressure fluctuations which may be detected by the acoustic sensors, resulting in noise. There is a continuing need to reduce noise in sonar systems, in order to improve sensitivity.

Prior art document 1 (EP 2279435 B1) discloses an apparatus including particle motion sensors and a streamer that contains the particle motion sensors. The streamer is to be towed in connection with a seismic survey, and the towing of the streamer produces a turbulent flow. The streamer includes an inner cable that contains the particle motion sensors and a fluid containing layer to surround the inner cable to reduce noise otherwise sensed by the particle motion sensors due to the turbulent flow.

Prior art document 2 (US 2019/004196 A1) discloses a seismic streamer which can include an outer tube that defines an interior space, sensor packages disposed in the interior space and spacers disposed in the interior space, where the spacers include swellable material.

Prior art document 3 (US 2007/201307 A1) discloses an anti-biofouling seismic streamer casing formed by a flexible tubing coated with a layer of a two-part heat cured silicone elastomer.

Prior art document 4 (WO 2014/053983 A1) discloses an anti-biofouling casing for a seismic streamer, comprising a polymer system comprising a hydrophobically-modified base polymer.

Prior art document 5 (US 8644109 B2) discloses a system and method for providing an anti-fouling function to a streamer to be towed under water for seismic survey data collection.

Prior art document 6 (NO 339390 B1) discloses a seismic streamer which includes a casing that covers the outside of the streamer. At least one strength member extends along the length of and is arranged inside the sheath.

Prior art document 7 (US 2708742 A) discloses electro-acoustic transducers and, in particular, arrayed constructions thereof.

BRIEF DESCRIPTION OF DRAWINGS

Embodiments of the invention will now be described by way of example only, with reference to the accompanying drawings in which:

Figure 1(a) is a schematic illustration of an example of a towable sonar array, being towed by a vessel;

Figure 1(b) is a schematic illustration of various example components of the towable sonar array;

Figure 2 is a schematic illustration of a casing for a towable sonar apparatus in accordance with an embodiment;

Figure 3(a) shows a schematic illustration of a cross-section along the length of the array of a part of the array comprising the casing of Figure 2;

Figure 3(b) shows a schematic illustration of a cross-section through the array and casing shown in Figure 2;

Figure 4(a) shows a schematic illustration of a cross-section along the length of the array of a part of the array comprising the casing of Figure 2;

Figure 4(b) shows a schematic illustration of a cross-section through the array and casing shown in Figure 2;

Figure 5 is a flow chart of a method of manufacturing a casing for a towable sonar apparatus in accordance with an embodiment;

Figure 6(a) shows a schematic illustration of a tubular mesh member which forms part of a casing for a towable sonar apparatus in accordance with an example useful for understanding the present invention, in an expanded configuration;

Figure 6(b) shows a schematic illustration of a tubular mesh member which forms part of a casing for a towable sonar apparatus in accordance with an example useful for understanding the present invention;

Figure 6(c) shows a schematic illustration of a tubular mesh member which forms part of a casing for a towable sonar apparatus in accordance with an example useful for understanding the present invention, in a collapsed configuration;

Figure 6(d) shows a schematic illustration of a tubular mesh member which forms part of a casing for a towable sonar apparatus in accordance with an example useful for understanding the present invention, in an expanded configuration;

Figure 6(e) shows a schematic illustration of a tubular mesh member which forms part of a casing for a towable sonar apparatus in accordance with an example useful for understanding the present invention, in a collapsed configuration;

Figure 7(a) shows a schematic illustration of part of a casing for a towable sonar apparatus in accordance with an example useful for understanding the present invention, in an expanded configuration;

Figure 7(b) shows a schematic illustration of part of a casing for a towable sonar apparatus in accordance with an example useful for understanding the present invention, in an expanded configuration;

Figure 8(a) shows a schematic illustration of part of a casing for a towable sonar apparatus in accordance with an example useful for understanding the present invention, in a collapsed configuration;

Figure 8(b) shows a schematic illustration of part of a casing for a towable sonar apparatus in accordance with an example useful for understanding the present invention, in a collapsed configuration;

Figure 9 is a flow chart of a method of manufacturing a casing for a towable sonar apparatus in accordance with an example useful for understanding the present invention .

DETAILED DESCRIPTION

According to a first aspect, there is provided a casing for a towable sonar apparatus as recited in claim 1.
In an embodiment, the tubular member comprises a plurality of open cells. The tubular member may comprise a closed cell foam. Alternatively, the tubular member may comprise an open cell foam. Using an open cell foam provides improved performance due to the same impedance of the water outside the casing and the water inside the cells of the foam.
In an embodiment, the first layer comprises an anti-biofouling material.
In an embodiment, the first layer comprises a polymer material. The first layer may comprise low density Polyethylene (LDPE), PolyvinylChloride (PVC), Polystyrene (PS), Nylon 6 (PA6), Polycarbonate (PC) or polyurethane.
In an embodiment, the tubular member comprises a polymer material. The tubular member may comprise PolyvinylChloride (PVC) or polyurethane.
In an embodiment, the tubular member comprises an anti-biofouling material.
In an embodiment, the first layer has a thickness of less than 1mm.
In an embodiment, the outer diameter of the tubular member in the radially expanded state is greater than 50mm.
In an embodiment, the tubular member comprises a tapered structure at one or both ends.
According to a further aspect, there is provided a towable sonar apparatus as recited in claim 7.
In an embodiment, the outer diameter of the tubular member is greater than or equal to twice the outer diameter of the tube. In an embodiment, the outer diameter of the tubular member is greater than or equal to three times the outer diameter of the tube.
According to a further aspect, there is provided a vessel comprising the above described towable sonar apparatus.
According to a further aspect, there is provided a kit-of-parts as recited in claim 9.
In an embodiment, the kit-of-parts further comprises a towable sonar apparatus comprising at least one sensor and a tube, wherein the at least one sensor is located inside the tube.
According to a further aspect, there is provided a computer program comprising computer executable instructions that, when executed by a processor, cause the processor to control an additive manufacturing apparatus to manufacture the above described casing or the above described kit of parts.
According to a further aspect, there is provided a method of manufacturing a casing as recited in claim 11.
According to a further aspect, there is provided a method of manufacturing a towable sonar apparatus, comprising:

 manufacturing a casing for a towable sonar array according to the above described method; and
 locating the casing around a portion of a tube in which at least one sensor is located.

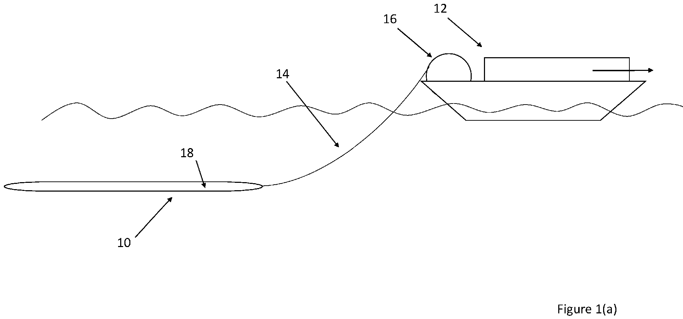

Figure 1(a) depicts an example of a towable sonar array 10, being towed by a vessel 12. The array 10 is attached to vessel 12 via a towing cable 14. The vessel 12 tows the array 10 in the direction of the arrow. The array 10 comprises a series of sensors (not shown) enclosed in a tube 18. The tube 18 may be a PolyvinylChloride (PVC) tube or hose. The sensors generate an electrical signal in response to a received acoustic signal. The array 10 may also be referred to as a towed line array, a seismic streamer or a linear array.

The cable 14 may be several thousand metres or more in length. This allows the array 10 to be deployed at some distance from the vessel 12, reducing the noise from the vessel 12. The cable 14 comprises an electrical conductor along which signals generated by the sensors in the array 10 are coupled to a recording apparatus in the vessel 12 (not shown). The cable 14 also comprises a power line, which supplies electrical power to the components in the array 10.

The array 10 itself may be tens or hundreds of metres in length for example. The array 10 may comprise multiple sections which are coupled together. An array of hundreds of metres in length may comprise multiple modules of around 10 metres in length. The modules are connected together. The connections between the modules are referred to as end connectors. The end connectors may be metallic, in order to cope with the tension that will be applied to them when the full array is towed.

The tube 18 may have an outer diameter of the order of 20mm or of the order of 200mm for example.

The array 10 may be an active sonar array, in which the sensor components both transmit and receive acoustic signals. Alternatively, the array may be a passive sonar array, in which the sensors only receive acoustic signals.

Various known acoustic sensors are suitable for use in a towed sonar array 10 of the type described in relation to Figure 1(a). The acoustic sensors may be hydrophones. A hydrophone may be based on a piezoelectric transducer. A piezoelectric transducer generates an electric potential when subjected to a pressure change. Various piezoelectric transducers can also generate acoustic signals, and therefore are suitable for use in an active sonar system. Multiple acoustic sensors are arranged spaced apart along the tube 18 forming an array 10.

The aperture of the array 10 corresponds to the distance between the first and the last acoustic sensor in array. The acoustic sensors are spaced apart along the tube 18, allowing directionality to be determined from the combined output. The acoustic sensors may be spaced evenly apart, with a spacing D between each sensor. One or more acoustic sensors may also be angled to allow determination of vertical depth.

A narrower beam width results in reduced noise, since noise generally originates from all directions. The gain against such noise is indicated by the directivity index. For a linear array with N hydrophones, the directivity index is given by:

$$10*\log(2ND/\text{wavelength})$$

where D is the spacing between the hydrophones. Increasing N increases the directivity index, and therefore improves array performance. Increasing N for a given sensor spacing D results in an increased array length.

Changes to the acoustic sensor spacing D impact the frequency of operation. Generally, the spacing may be set at half wavelength. For example, a spacing between the acoustic sensors may be of the order of 1m for example. An array with larger N and spacing less than half wavelength could operate at a higher frequency for example.

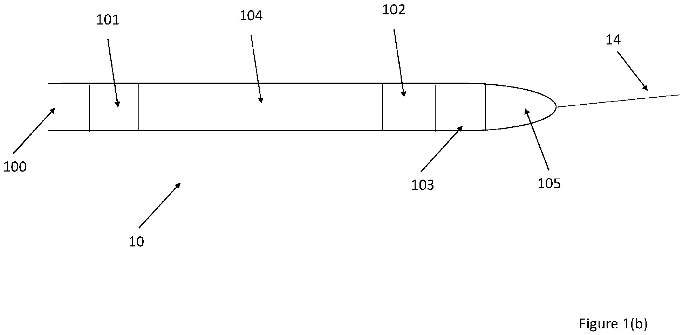

Figure 1(b) is a schematic illustration of various components of the example towable sonar array 10 in more detail. A first end of the towable sonar array 10 is attached to the cable 14. The first end comprises a nose cone 105, which has a tapered shape. The nose cone 105 may be formed from a metal material, and the tube 18 is attached to the nose cone 105 forming a smooth diameter change from the tube 18 to the end of the array 10. Located next to the nose cone 105 and within the tube 18 is a vibration isolation module 103. The vibration isolation module 103 is configured to suppress vibrations in the array 10. The vibration isolation module 103 is followed by a forward interface module 102, also located within the tube 18. The forward interface module 102 may comprise various electronic components such as power regulators, analogue-to-digital converters, amplifiers and/or filters for example. The acoustic module 104 is then located next to the forward interface module 102 and within the tube 18. The acoustic module 102 comprises the acoustic sensors as described above. Located the other side of the acoustic module 102 and within the tube 18 is an aft sensor module 101. This may comprise various other sensors such as depth sensors and/or heading sensors for example. A wideband sonar module 100 is located at the second end of the towable array 10 and within the tube 18. Although not shown, a second nose cone may be located at the second end of the array 10. It is to be understood that Figure 1(b) shows an example configuration, and various components shown may be omitted or modified depending on application requirements for the array 10 for example.

Returning to Figure 1(a), a towing winch drum 16 is mounted on the vessel 12. The towing cable 14 is coupled to the winch drum 16, allowing the cable 14 and array 10 to be wound in around the winch drum 16 when not in use. The tube 18 is sufficiently flexible to be wound around the winch drum 16. The diameter of the tube 18 is also selected to be sufficiently small that the entire array 10 can be wound onto the winch drum 16. The tube 18 also serves to protect the sensors contained within the tube 18, for example during the reeling process. Various tubes 18 are known to provide sufficient protection for the enclosed sensors whilst also being sufficiently thin and flexible to be wound and stored on the reel 16. For example, a PVC tube 18 having an outer diameter of the order of 75mm and a wall thickness of the order of a few mm may be used.

Movement of the sonar apparatus through water can be a source of noise in the towed sonar array 10. The movement through the water creates a turbulent boundary layer around the towed array 10. The turbulent flow results in pressure fluctuations which may be detected by the acoustic sensors, resulting in noise. The thinner the tube 18, the closer the turbulent flow layer of water is to the sensors. The smaller the diameter of the tube 18, the more susceptible the array elements therefore are to flow noise, limiting overall array acoustic performance.

In order to reduce the flow noise, a larger diameter tube 18 may be used. However, a greater space would then need to be allotted to storage of the array on the platform. For example, for a reelable towed array, this may mean that a larger winch drum 16 is required. Alternatively, a shorter array 10 could be used. Shortening the length of the array could allow a larger diameter to be used, whilst ensuring the array still fits around a particular winch drum 16. However, shortening the array limits the essential aperture, which is related to array performance as described above. To store a reelable array 10 takes up space on the platform, and therefore a reduction in diameter may provide additional space, or allow longer arrays to be stored on legacy winch drum 16, resulting in improved array performance.

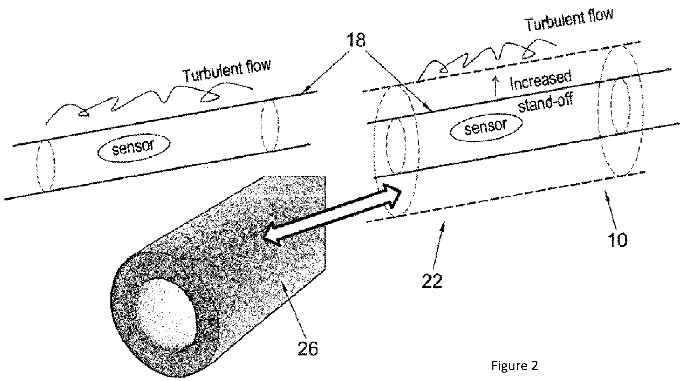

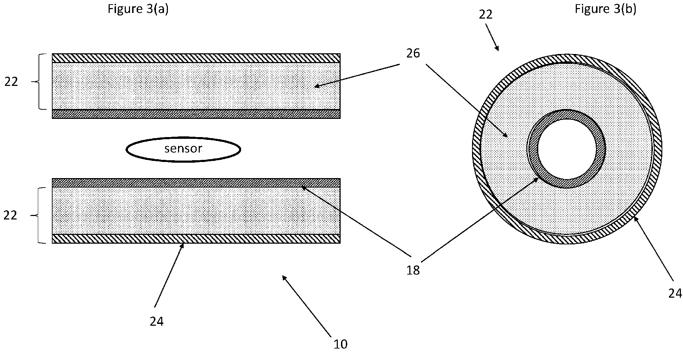

Figure 2 shows a casing 22 for a towable sonar apparatus 10 in accordance with an embodiment. The figure shows a towable array 10 comprising a tube 18 located within the casing 22 on the right hand side of the figure. The tube 18 and sensors are shown separately from the casing 22 on the left hand side of the figure. A tubular foam member 26 which forms part of the casing 22 is also shown. Figure 3(a) shows a cross-section along the length of the array 10, of a part of the array 10 comprising the casing 22. Figure 3(b) shows a cross-section through the array, i.e. in a plane perpendicular to the length direction.

The array 10 may be attached to a vessel 12 via a towing cable 14 as shown in Figure 1(a), where a towing winch drum 16 is used to wind in the cable 14 and array 10 as described in relation to Figure 1(a). The array 10 comprises a series of sensors enclosed in the tube 18, which may be a PVC tube or hose as described in relation to Figure 1(a). Various known sensors such as described in relation to Figure 1(a) are suitable for use in the towed sonar array 10.

The casing 22 surrounds the tube 18 of the towed array. The casing 22 comprises a tubular foam member 26, wherein the tube 18 is located inside the tubular foam member 26. The tubular foam member 26 comprises a plurality of open cells. These cells are not sealed and are permeable to water. This means that when deployed, water from outside of the casing 22 can permeate through the open cells of the tubular foam member 26. Thus when the casing 22 is deployed in the water, the open cells of the tubular foam member 26 fill with water.

The tubular foam member 26 is an open-cell foam sleeve. The tubular foam member 26 has the form of a hollow cylinder. The outer diameter of the tubular foam member 26 is selected based on the length of the array 10 and the available storage space for example. For example, the outer diameter is selected as the maximum value possible given the storage space and length of the array 10 for the desired application. The outer diameter may be of the order of 40mm or 400mm for example. The outer diameter may be around twice the outer diameter of the tube 18 for example. The inner diameter of the tubular foam member 26 is selected to fit around the tube 18. As described above, the tube 18 may have an outer diameter of the order of 20mm or of 200mm for example. The tubular foam member 26 forms a sleeve around the outside of the tube 18. The casing 22 may be provided over the entire acoustic aperture, i.e. the entire section of the tube 18 comprising the sensors.

The tubular foam element 26 is bonded to the outer wall of the tube 18. For example, the tubular foam element 26 is bonded to the outer wall of the tube 18 by an epoxy adhesive. Various epoxy adhesives are suitable for underwater use. For example, a two part epoxy adhesive may be used.

Additionally or alternatively, the tubular foam member 26 is mechanically attached at one or both ends of the array 10.

The tubular foam member 26 comprises an open cell structure foam. In an embodiment, less than 50% of the cells in the tubular foam member 26 are closed cells, i.e. cells that are sealed. In a further embodiment, less than 20% of the cells in the tubular foam member 26 are closed cells, i.e. cells that are sealed. In a further embodiment, less than 1% of the cells in the tubular foam member 26 are closed cells, i.e. cells that are sealed. The tubular foam member 26 comprises a plurality of cells which are water permeable. The foam may comprise a polymer material, for example polyurethane. The foam may comprise greater than 90% percent of void space for example.

An outer layer 24 is provided around the outside of the foam. The outer layer 24 is porous. The outer layer 24 is also referred to as a first layer 24. The outer layer 24 is thin relative to the tubular foam member 26. The outer layer 24 is also thinner than the tube 18. The outer layer 24 provides protection to the tubular foam member 26. The outer layer 24 is arranged around the outside of the tubular member 26. The outer layer 24 is comprised of a water permeable material.

The outer layer 24 may be a sprayon coating which has been applied to the foam member 26. The thickness of the outer layer 24 coating may be of the order of microns. The outer layer 24 coating comprises a polymer material having a high water permeability. Examples of such polymer materials include low density Polyethylene (LDPE), PolyvinylChloride (PVC), Polystyrene (PS), Nylon 6 (PA6) and Polycarbonate (PC). Polymer materials having a high water permeability may include polymer materials having a relatively high moisture vapour transmission rate for example.

Alternatively, the outer layer 24 may comprise a flexible sleeve of polymer material having holes or channels formed to allow passage of water through the sleeve and into the foam member 26. For example, holes having a diameter of the order of 0.1mm or 0.5mm or 1mm may be formed in the outer layer 24 to allow passage of water. The holes may be spaced apart around and along the outer layer 24, for example at a spacing of the order of 1cm or of the order of 5cm. For example, the sheet may be PVC or polyurethane. The sheet may have a thickness of the order of 0.1mm or 1 mm or 100mm for example.

The casing 22 comprises the open cell structure foam member 26 and the water permeable outer layer 24. The casing 22 is therefore water permeable. The tubular foam member 26 acts to trap a layer of relatively still water around the tube 18. In other words, water permeates the open cells within the foam member 26. The water permeable outer layer 24 further contributes to trapping a layer of relatively still water within the open cells of the foam. Water trapped within the open cells of the foam is subject to less movement than water flowing around the outside of the casing 22.

The water flowing around the outside of the casing 22 is subject to turbulent flow. However, this turbulent flow is spaced apart from the sensors within the tube 18 by the thickness of the casing 22. The water trapped within the casing 22 experiences relatively less turbulent flow. Since the turbulent flow is mainly spaced apart from the sensors by the distance of the thickness of the casing 22, less noise is generated at the sensors from the turbulent flow. The casing 22 provides an acoustically transparent "stand-off", which reduces the evanescent noise field at the sensor sites due to the turbulent flow. Evanescent noise results from acoustic waves that are not propagating but are spatially concentrated in the vicinity of the tube 18, including the turbulent flow. The radial component of the flow noise is reduced, since the flow is spaced apart from the sensors. The turbulent boundary layer is moved away from the sensors, in other words, the separation distance increases. The casing 22 traps a layer of relatively still water between the towed array hose 18 and the turbulent flow. The casing 22 may be particularly suited for passive sonar arrays for example, where flow noise can have more impact due to the smaller signal size.

The casing 22 is collapsible. This means that when the array 10 is wound in around the winch drum 16, the foam can be collapsed down to a smaller diameter than when it is deployed in the water. The foam is compressible to less than half the deployed outer diameter.

For example, the array 10 including the casing 22 may be passed through a device that constricts the casing 22 prior to winding around a winch drum. The casing 22 is particularly suited for use with a reelable towed array. For example, by using the casing 22, a reelable towed array with a longer aperture (i.e. a longer array length) can be used within a constrained volume, whilst mitigating flow noise when deployed. The casing 22 may therefore also be particularly suited for large aperture sonar arrays, where the longer length of the array means that a smaller diameter is required in order for the array to wind onto a winch drum of fixed size.

On reeling in, the casing 22 collapses as it goes onto the drum, squeezing out the water. On reeling out the sleeve expands again, trapping in relatively still water. The tubular foam member 26 expands when deployed and fills with water, producing a layer of relatively still water and an increased stand-off between the sensors and the flow, with a commensurate decrease in flow noise. On reeling in the tubular foam member 26 expels the water and compresses. Optionally, a protective element is included between layers of the array 10 when reeling onto the winch drum 16, to prevent the weight of the array layers on top causing damage to or crushing the foam member 26.

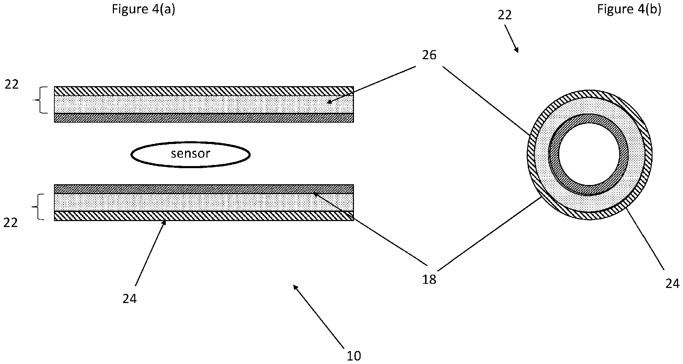

Figures 4(a) and 4(b) show cross-sectional views of the array when the tubular foam member 26 is collapsed. Figure 4(a) shows a cross-section along the length of the array 10, of a part of the array 10 comprising the casing 22. Figure 4(b) shows a cross-section through the array, i.e. in a plane perpendicular to the length direction. As can be seen, the thickness of the tubular foam member 26 is reduced, meaning that the overall outer diameter of the array 10 is reduced compared to the non-collapsed configuration. The casing 22 provides reduced flow-noise due to the thicker diameter during deployment, while providing a large aperture within a small reelable volume.

The casing 22 also serves to provide an extra layer of protection to the sensors. The foam is robust. The foam is resilient to shear forces, such as those experienced during reeling. The casing 22 is durable and therefore is not damaged by reeling in and out during deployment. The tubular foam member may be made from a resilient polymer material to enhance robustness, for example polyurethane.

The foam may deform when subject to pressure but return to its original shape once the pressure is removed. The foam has little or no hysteresis, expanding to its full extent within the deployment timescales, i.e. the time taken to reel out the array. The time may be of the order of a second to a few seconds for example. The tubular foam member 26 expands with a short enough hysteresis time that the stand-off is maintained before acoustic operations are performed. The hysteresis time is dependent on the foam structure and material. The foam material is manufactured or selected to be compliant in bending and not to introduce a significant bending constraint during manoeuvres.

At one or both ends of the casing 22, fairings are formed to avoid instability and to provide a smooth transition for the surrounding flow. The casing 22 confers only a small drag increase on the towed array. The casing 22 provides a transition section, comprising a taper, at one or both ends of the casing 22 to prevent a sudden change in diameter. One or both ends of the casing 22 are formed with a taper.

As has been described above, a towable array may comprise multiple modules connected together with end connectors. The end connectors are also configured to allow connection of the casing 22 to the hose 18. This may be in addition or alternative to the adhesive bonding used to fix the casing 22 to the hose 18 described above. The end connector 18 is increased in thickness to accommodate the casing 22 and fix the casing 22 to the hose 18. The thickness increase matches the crushed diameter of the foam member 26 to provide smooth layering on the winch drum 16.

Optionally, an anti-biofouling treatment is applied to the tubular foam member 26. A sonar system may be used in the water for extended periods, for example several weeks or months. Such conditions may permit growth of marine life on the surface of the sonar system. This is referred to as 'bio-fouling'. This may be a particular problem for sonar systems operating in tropical environments for example. Bio-fouling on the surface of the sonar system may further increase the hydrodynamic drag, and thus increase the noise and impact the sonar performance. Removal of such growth may require periodic maintenance of the array however.

By including an anti-biofouling treatment in or on the tubular foam member 26, the growth of such marine life may be inhibited. The anti-biofouling treatment may comprise particles of copper or particles of a copper alloy such as brass, copper oxide, copper thiocyanate, copper bronze, copper napthenate, copper resinate, copper nickel, and copper sulfide. These particles may be mixed in with the melted polymer material used to form the foam member 26. For example, a mixture of the polymer material with 10% - 40% of the copper or copper alloys is used. Alternatively, the anti-fouling treatment may be applied as a spray-on coating to the foam member 26.

Similarly, an anti-biofouling treatment may be included in or on the outer layer 24. Particles may be mixed in with the polymer material used to form the outer layer 24, for example as part of the spray coating. Alternatively, the anti-fouling treatment may be applied as a separate spray on coating after the outer layer 24 is applied.

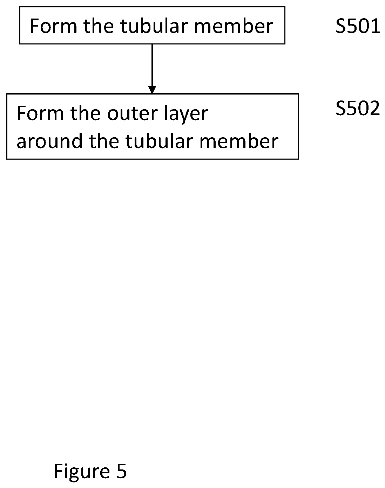

Figure 5 is a flow chart of a method of manufacturing a casing for a towable sonar apparatus in accordance with an embodiment, comprising a tubular foam member 26.

The tubular foam member 26 is fabricated from an open-celled foam in S501. Manufacturing of open cells can be achieved through a chemical reaction in the foaming process causing bubbles to burst, or application of heat and pressure to burst the cell walls. A commercially available polyurethane foam may be used for example. The foam is manufactured into a tubular shape having the desired length, inner diameter and outer diameter. The foam may be machined to the tubular shape for example.

In S502, the outer layer 24 is formed around the tubular member 26. This may comprise applying a spray on coating. Alternatively, this may comprise bonding a thin flexible sleeve around the tubular member 26 with an epoxy adhesive for example.

Once formed, the tubular foam member 26 is then bonded to the towed array. For example, the tubular foam element 26 is bonded to the outer wall of the tube 18 by an epoxy adhesive. Various epoxy adhesives are suitable for underwater use. For example, a two part epoxy adhesive may be used.

Additionally or alternatively, the tubular foam member 26 is mechanically attached at one or both ends of the array 10.

In Figures 2 to 5, a casing 22 is described which comprises a tubular foam member 26. Alternatively however, in an example useful for understanding the present invention, a tubular member in the form of a mesh member may be used in place of the tubular foam member 26.

In the below examples useful for understanding the present invention, the tubular mesh member 28 has a stent-like construction and comprises regular cell shapes, in periodically repeating arrangements. However alternatively and depending on the manufacturing process, the size and shape of the cells may be more random.

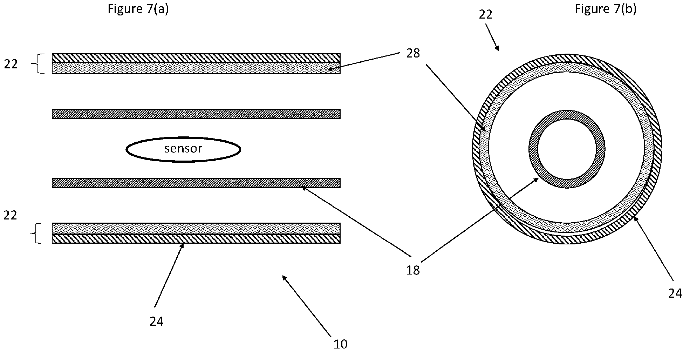

For example, the tubular mesh member 28 may alternatively be fabricated using foam based techniques. Whereas in Figures 2 to 5, the tubular foam member 26 has an inner diameter approximately the same as the outer diameter of the hose 18, the tubular mesh member 28 may comprise a foam tube having an inner diameter larger than the outer diameter of the hose 18, such that the tubular mesh member 28 is spaced apart from the hose as shown in Figure 7. For example, the inner diameter of the foam tube may be around 1.5 times the outer diameter of the tube 18 for example, or around twice the diameter of the tube 18. The thickness of the foam tube may be around 5mm or around 10mm or around 50mm for example. For a reelable array 10, the foam tube may then expand into the gaps between the circular hoses 18 on the winch drum 16 when stored.

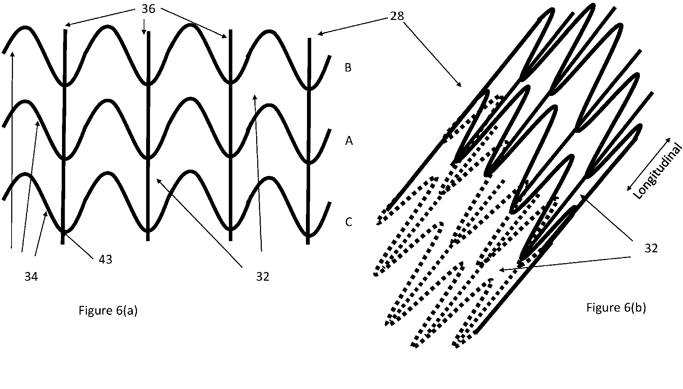

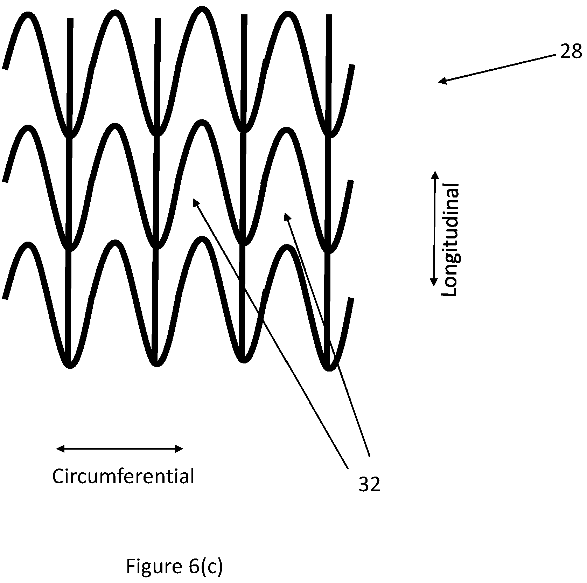

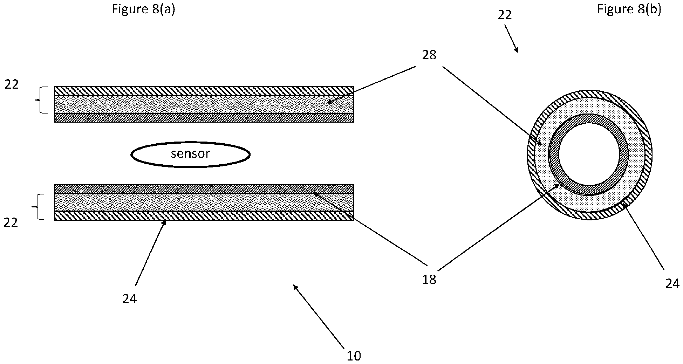

Figures 6(a), 6(b) and 6(c) show a schematic illustration of a tubular mesh member 28, which has a stent-like construction. The tubular mesh member 28 forms part of a casing 22 for a towable sonar apparatus 10 in accordance with an example useful for understanding the present invention as shown in Figures 7 and 8. Figures 6(a) and (c) show the structure of the mesh in an unwrapped configuration, whereas Figure 6(b) shows the tubular mesh member 28. Figure 6(a) shows a schematic illustration of the tubular mesh member 28 in an expanded configuration, Figure 6(c) shows a schematic illustration of the tubular mesh member 28 in a collapsed configuration.

The tubular mesh member 28 may comprise a polymer material, such as polyurethane or PVC.

The mesh member 28 comprises a plurality of struts 34, 36 defining a plurality of cells 32. The cells 32 are the spaces enclosed by the struts 34, 36. The mesh 28 comprises vertices 43 connected between the struts 34, 36. The vertices 43 are the connection portions between two or more struts 34, 36. The vertices 43 are hinged portions of the mesh 28.

The tubular mesh member 28 comprises a plurality of open cells 32. These cells are not sealed and are permeable to water. This means that when deployed, water from outside of the casing 22 can permeate through the cells 32 of the tubular mesh member 28. Thus when the casing 22 is deployed in the water, the cells 32 of the tubular mesh member 28 allow water through, such that water fills the space between the tubular mesh member 28 and the tube 18.

The mesh 28 structure shown in Figure 6(a) is comprised of a plurality of ring-like struts 34. Each ring-like strut 34 has a wave-like form, such that it comprises a plurality of peaks and troughs. The peaks and troughs of each ring-like strut 34 are aligned along the length of the mesh member 28. The ring-like struts 34 are connected to each other through a plurality of longitudinal struts 36. Troughs around a first ring-like strut A are connected to the corresponding troughs of a second ring-like strut B which is adjacent to the first ring-like strut A and located on one side of the first ring-like strut A. Troughs around the first ring-like strut A are also connected to the corresponding troughs of a third ring-like strut C which is adjacent to the first ring-like strut A on the other side of the first ring-like strut A.

In the collapsed configuration, shown in Figure 6(c), the waves in the ring-like struts 34 are compressed in the circumferential direction and elongated in the longitudinal direction. The circumference and radius of the tubular mesh member 28 is therefore reduced. In the expanded configuration, shown in Figure 6(a), the waves in the ring-like struts 34 are expanded in the circumferential direction and reduced in the longitudinal direction. The circumference and radius of the tubular mesh member 28 is therefore expanded.

The tubular mesh member 28 comprises a plurality of cells 32, some of which are labelled in the figure. The cells are water permeable. The tubular mesh member 28 has the form of a cylinder. The outer diameter of the tubular mesh member 28 is selected based on the length of the array 10 and the available storage space. For example, the outer diameter is selected as the maximum value possible given the storage space and length of the array 10 for the desired application. The outer diameter may be of the order of 40mm or 400mm for example. The outer diameter may be around twice the outer diameter of the tube 18 for example.

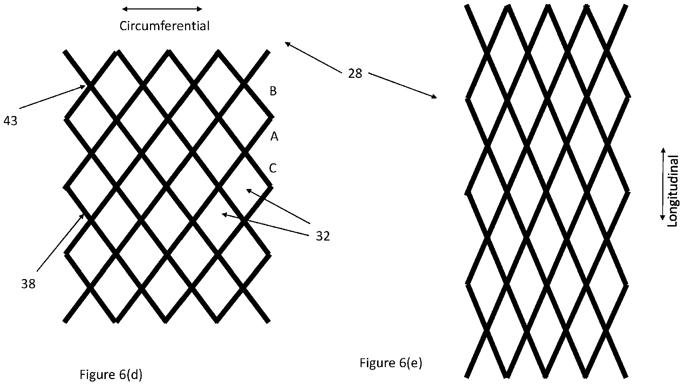

Figures 6(d) and (e) show an alternative structure for the mesh in an unwrapped configuration. The tubular mesh member 28 shown here forms part of a casing 22 for a towable sonar apparatus 10 in accordance with an example useful for understanding the present invention, as shown in Figures 7 and 8. Figure 6(d) shows a schematic illustration of the tubular mesh member 28 in an expanded configuration and Figure 6(e) shows a collapsed configuration.

The mesh member 28 comprises a plurality of struts 38 defining a plurality of cells 32. The cells 32 are the spaces enclosed by the struts 38. The mesh 28 comprises vertices 43 connected between the struts 38. The vertices 43 are the connection portions between two or more struts 38. The vertices 43 are hinged portions of the mesh 28.

The mesh 28 is comprised of a plurality of struts 38 arranged in a direction which has a component in the circumferential direction and a component in the longitudinal direction. The struts 38 are connected at each end to three other struts, forming diamond shaped cells 32. At the ends of the mesh member 28 the struts 38 may be connected to one other strut 38 only.

The mesh 28 comprises rings of struts in a zig-zag formation. A first ring A comprises a plurality of struts in a zig-zag formation, such that it comprises of a plurality of peaks and troughs. The rings are connected to each other. Each trough around a first ring A is connected to a corresponding peak of a second ring C which is adjacent to the first ring A and located on one side of the first ring A. Each peak around the first ring A is connected to the corresponding trough of a third ring B which is adjacent to the first ring A on the other side of the first ring A.

In the collapsed configuration, the zig-zag formations are compressed in the circumferential direction and elongated in the longitudinal direction. The circumference and radius of the tubular mesh member 28 is therefore reduced. In the expanded configuration, the zig-zag formations are expanded in the circumferential direction and reduced in the longitudinal direction. The circumference and radius of the tubular mesh member 28 is therefore expanded.

The tubular mesh member 28 comprises a plurality of cells 32, some of which are labelled in the figure. The cells are water permeable. The tubular mesh member 28 has the form of a cylinder. The outer diameter of the tubular mesh member 28 is selected based on the length of the array 10 and the available storage space. For example, the outer diameter is selected as the maximum value possible given the storage space and length of the array 10 for the desired application. The outer diameter may be of the order of 40mm or 400mm for example. The outer diameter may be around twice the outer diameter of the tube 18 for example.

Again, the tubular mesh member 28 comprises a plurality of open cells 32. These cells are not sealed and are permeable to water. This means that when deployed, water from outside of the casing 22 can permeate through the cells 32 of the tubular mesh member 28. Thus when the casing 22 is deployed in the water, the cells 32 of the tubular mesh member 28 allow water through, such that water fills the space between the tubular mesh member 28 and the tube 18.

Figures 7(a) and 7(b) show part of a casing 22 for a towable sonar apparatus 10 in accordance with an example useful for understanding the present invention,. The figure shows a towed array 10 comprising a tube 18 located within the casing 22. A tubular mesh member 28 such as shown in Figures 6(a)-(c) or Figures 6(d) and (e) forms part of the casing 22. Figure 7(a) shows a cross-section along the length of the array 10, of a part of the array 10 comprising the casing 22. Figure 7(b) shows a cross-section through the array, i.e. in a plane perpendicular to the length direction.

The array 10 may be attached to a vessel 12 via a towing cable 14 as shown in Figure 1(a), where a towing winch drum 16 is used to wind in the cable 14 and array 10 as described in relation to Figure 1(a). The array 10 comprises a series of sensors enclosed in the tube 18, which may be a PVC tube or hose as described in relation to Figure 1(a). Various known sensors such as described in relation to Figure 1(a) are suitable for use in the towed sonar array 10.

The casing 22 surrounds the tube 18 of the towed array. The casing 22 comprises a tubular mesh element 28, wherein the tube 18 is located inside the tubular mesh element 28. The tubular mesh member 28 forms a sleeve around the outside of the tube 18. The casing 22 may be provided over the entire acoustic aperture, i.e. the entire section of the towed array 10 comprising the sensors.

An outer layer 24 is provided around the outside of the tubular mesh member 28. The outer layer 24 is porous. The outer layer 24 is also referred to as a first layer 24. The outer layer 24 is a water permeable polymer. The outer layer 24 is thin relative to the tube 18. The outer layer 24 provides protection to the tubular mesh member 28. The outer layer 24 is arranged around the outside of the tubular member 28. The outer layer 24 is a porous outer layer 24.

The outer layer 24 may comprise a polymer material having a high water permeability. Examples of such polymer materials include low density Polyethylene (LDPE), PolyvinylChloride (PVC), Polystyrene (PS), Nylon 6 (PA6) and Polycarbonate (PC). Polymer materials having a high water permeability may include polymer materials having a relatively high moisture vapour transmission rate for example.

As described previously, the outer layer 24 may be a spray on coating. The thickness of the coating may be of the order of microns.

Alternatively, the outer layer 24 may comprise a thin flexible tube of polymer material having holes or channels formed to allow passage of water. For example, holes having a diameter of the order of 0.1mm or 0.5mm or 1mm may be formed in the outer layer 24 to allow passage of water. The holes may be spaced apart around and along the outer layer 24, for example at a spacing of the order of 1cm. For example, the sheet may be PVC or polyurethane. The sheet may have a thickness of the order of 0.1mm or 1 mm.

The casing 22 comprises the mesh member 28 comprising the water permeable cells and the water permeable outer layer 24. The casing 22 is therefore water permeable. The tubular mesh member 28 and the outer layer 24 act to trap a layer of relatively still water around the tube 18. In other words, water permeates the outer layer 24 and the cells within the mesh 28. Water trapped within the casing 22 is subject to less movement than water flowing around the outside of the casing 22.

The water flowing around the outside of the casing 22 is subject to turbulent flow. However, this turbulent flow is spaced apart from the sensors within the tube 18 by the spacing of the casing 22 from the tube 18. The water trapped within the casing 22 experiences relatively less turbulent flow. Since the turbulent flow is mainly spaced apart from the sensors by the distance of the casing 22, less noise is generated at the sensors from the turbulent flow. The casing 22 provides an acoustically transparent "stand-off", which reduces the evanescent noise field at the sensor sites due to the turbulent flow. The casing 22 traps a layer of relatively still water between the towed array hose 18 and the turbulent flow. The casing 22 may be particularly suited for passive sonar arrays, for example, where flow noise can have more impact due to the smaller signal size.

The tubular mesh member 28 is sprung such that it deploys radially as it is reeled out, filling the gap between the mesh 28 and the tube 18 with relatively still water. The water squeezes out as the array 10 is reeled in again. The casing 22 is therefore collapsible. This means that when the array is wound in around a reel, the mesh collapses down to a smaller diameter, i.e. to a radially collapsed configuration such as was described above. For example, the array 10 including the casing 22 may be passed through a device that constricts the casing 22 prior to winding around a reel. The casing 22 is particularly suited for use with a reelable towed array. For example, by using the casing 22, a reelable towed array with a longer aperture (i.e. a longer array length) can be used within a constrained volume, whilst mitigating flow noise when deployed. The casing 22 may be particularly suited for large aperture sonar arrays, where the longer length of the array means that a smaller diameter is required in order for the array to wind onto a winch drum of fixed size. On reeling in, the casing 22 collapses as it goes onto the drum, squeezing out the water. On reeling out the mesh expands again, trapping in relatively still water. The tubular mesh member 28 expands when deployed and fills with water producing a layer of relatively still water and an increased stand-off between the sensors and the flow, with a commensurate decrease in flow noise. On reeling in the tubular mesh member 28 expels the water and compresses.

Figures 8(a) and 8(b) show cross-sectional views of the array when the tubular mesh member 28 is collapsed. Figure 8(a) shows a cross-section along the length of the array 10, of a part of the array 10 comprising the casing 22. Figure 8(b) shows a cross-section through the array, i.e. in a plane perpendicular to the length direction. As can be seen, the outer diameter of the tubular mesh member 28 is reduced, meaning that the overall outer diameter of the array 10 is reduced compared to the non-collapsed configuration. The casing 22 provides reduced flow-noise due to the thicker diameter during deployment, while providing a large aperture within a small reelable volume.

The casing 22 also serves to provide an extra layer of protection to the sensors. The tubular mesh member 28 may be made from a resilient polymer material to enhance robustness, for example PVC or polyurethane.

The tubular mesh member 28 collapses when subject to pressure but returns to its original shape once the pressure is removed. The mesh has little or no hysteresis, expanding to its full extent within the deployment timescales, i.e. the time taken to reel out the array. The hysteresis time is dependent on the structure and material. The tubular mesh member 28 expands with a short enough hysteresis time that the stand-off is maintained before acoustic operations are performed.

The tubular mesh member 28 is manufactured to be compliant in bending and does not introduce a significant bending constraint during manoeuvres.

At one or both ends of the casing 22, fairings are formed to avoid instability and to provide a smooth transition for the surrounding flow. The casing 22 confers only a small drag increase on the towed array. The casing 22 provides a transition section, comprising a taper, at one or both ends of the casing 22 to prevent a sudden change in diameter. One or both ends of the casing 22 are formed with a taper.

As has been described above, a towable array may comprise multiple modules connected together with end connectors. The end connectors are also configured to allow connection of the casing 22 to the hose 18. This may be in addition or alternative to the adhesive bonding used to fix the casing 22 to the hose 18 described above. The end connectors may be metallic. The end connector 18 is increased in thickness to accommodate the casing 22 and fix the casing 22 to the hose 18. The thickness increase matches the crushed diameter of the foam member 26 to provide smooth layering on the winch drum 16.

Optionally, an anti-biofouling treatment is applied to the tubular mesh member 28. By applying an anti-biofouling treatment to the mesh, the growth of marine life may be inhibited. The anti-biofouling treatment may comprise particles of copper or particles of a copper alloy such as brass, copper oxide, copper thiocyanate, copper bronze, copper napthenate, copper resinate, copper nickel, and copper sulfide. These particles are mixed in with the molten polymer material used to form the mesh member 28. For example, a mixture of the polymer material with 10% - 40% of the copper or copper alloys is formed. Alternatively, the anti-fouling treatment may be applied as a spray on coating to the mesh member 28.

Similarly, an anti-biofouling treatment may be included in or on the outer layer 24. Particles are mixed in with the polymer material used to form the outer layer 24, for example as part of the spray coating. Alternatively, the anti-fouling treatment may be applied as a separate spray on coating after the outer layer 24 is applied.

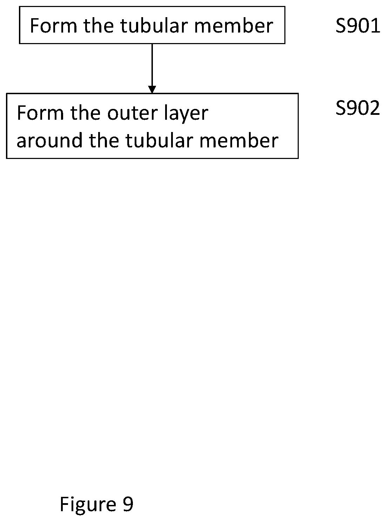

Figure 9 is a flow chart of a method of manufacturing a casing for a towable sonar apparatus in accordance with an example useful for understanding the present invention,, comprising a tubular mesh member 28.

In step S901, the tubular mesh member 28 is constructed. The tubular mesh member 28 may be constructed using an additive manufacturing technique. A common example of additive manufacturing is 3D printing; however, other methods of additive manufacturing are available. Rapid prototyping or rapid manufacturing are also terms which may be used to describe additive manufacturing processes. As used herein, "additive manufacturing" refers generally to manufacturing processes wherein successive layers of material(s) are provided on each other to "build-up" layer-by-layer or "additively fabricate", a three-dimensional component. This is compared to some subtractive manufacturing methods (such as milling or drilling), wherein material is successively removed to fabricate the part. The successive layers generally fuse together to form a monolithic component which may have a variety of integral subcomponents. In particular, the manufacturing process may allow the tubular mesh member 28 to be integrally formed.

For example, an additive manufacturing technique based on vat polymerisation may be used to form the tubular mesh member 28. In this case, a light source is used to selectively cure sequential layers of molten polymer material in a vat to form the mesh member 28. Loading of particles in the resin or molten polymer, for example, anti-biofouling treatments as discussed above is possible. An example of such a technique is fusion deposition modelling. Alternatively, an additive manufacturing technique based on material extrusion may be used. In this case, a malleable polymer material (e.g. a polymer material brought to a specific temperature) is extruded and cured in sequential layers to form the mesh member 28. An example of such a technique is stereolithography or digital light processing. Curing may be achieved using light, with the temperature at room temperature or slightly above.

Additive manufacturing processes may fabricate components based on three-dimensional (3D) information, for example a three-dimensional computer model (or design file), of the component. The structure of the tubular mesh member 28 may therefore be represented digitally in the form of a design file. Design files can take any now known or later developed file format. For example, design files may be in the Stereolithography or "Standard Tessellation Language" (.stl) format which was created for stereolithography CAD programs of 3D Systems, or the Additive Manufacturing File (.amf) format, which is an American Society of Mechanical Engineers (ASME) standard that is an extensible markup-language (XML) based format designed to allow any CAD software to describe the shape and composition of any three-dimensional object to be fabricated on any additive manufacturing printer. Further examples of design file formats include AutoCAD (.dwg) files, Blender (.blend) files, Parasolid (.x_t) files, 3D Manufacturing Format (.3mf) files, Autodesk (3ds) files, Collada (.dae) files and Wavefront (.obj) files, although many other file formats exist. Design files can be produced using modelling (e.g. CAD modelling) software and/or through scanning the surface of tubular mesh member 28 to measure the surface configuration of the mesh member 28.

Once obtained, a design file may be converted into a set of computer executable instructions that, once executed by a processer, cause the processor to control an additive manufacturing apparatus to produce a the tubular mesh member 28 according to the geometrical arrangement specified in the design file. The conversion may convert the design file into slices or layers that are to be formed sequentially by the additive manufacturing apparatus. The instructions (otherwise known as geometric code or "G-code") may be calibrated to the specific additive manufacturing apparatus and may specify the precise location and amount of material that is to be formed at each stage in the manufacturing process. As discussed above, the formation may be through deposition or through any other suitable form of additive manufacturing method.

The code or instructions may be translated between different formats, converted into a set of data signals and transmitted, received as a set of data signals and converted to code, stored, etc., as necessary. The instructions may be an input to the additive manufacturing system and may come from a part designer, an intellectual property (IP) provider, a design company, the operator or owner of the additive manufacturing system, or from other sources. An additive manufacturing system may execute the instructions to fabricate the tubular mesh member 28 using any of the technologies or methods disclosed herein.

Design files or computer executable instructions may be stored in a transitory or non-transitory computer readable storage medium (e.g., memory, storage system, etc.) storing code, or computer readable instructions, representative of the tubular mesh member 28 to be produced. As noted, the code or computer readable instructions defining the tubular mesh member 28 that can be used to physically generate the tubular mesh member 28, upon execution of the code or instructions by an additive manufacturing system. For example, the instructions may include a precisely defined 3D model of the tubular mesh member 28 and can be generated from any of a large variety of well-known computer aided design (CAD) software systems such as AutoCAD®, TurboCAD®, DesignCAD 3D Max, etc. Alternatively, a model or prototype of the tubular mesh member 28 may be scanned to determine the three-dimensional information of the tubular mesh member 28.

Accordingly, by controlling an additive manufacturing apparatus according to the computer executable instructions, the additive manufacturing apparatus can be instructed to print out the tubular mesh member 28.

In light of the above, methods of manufacture via additive manufacturing may include the steps of obtaining a design file representing the tubular mesh member 28 and instructing an additive manufacturing apparatus to manufacture the tubular mesh member 28 according to the design file. The additive manufacturing apparatus may include a processor that is configured to automatically convert the design file into computer executable instructions for controlling the manufacture of the tubular mesh member 28. In these embodiments, the design file itself can automatically cause the production of the tubular mesh member 28 once input into the additive manufacturing device. Accordingly, in this embodiment, the design file itself may be considered computer executable instructions that cause the additive manufacturing apparatus to manufacture the tubular mesh member 28. Alternatively, the design file may be converted into instructions by an external computing system, with the resulting computer executable instructions being provided to the additive manufacturing device.

Given the above, the design and manufacture of the tubular mesh member 28 can be realized using digital electronic circuitry, or in computer software, firmware, or hardware, or in combinations of one or more of them, as will be described in further detail below.

In S902, the outer layer 24 is formed around the tubular member 28. This may comprise applying a spray on coating. Alternatively, this may comprise bonding a thin flexible sleeve around the tubular member 28 with an epoxy adhesive for example. Although this is described here as a separate step, it is to be understood that the outer layer 24 may alternatively be formed in the same process as the tubular mesh member 28 using additive manufacturing.

Once formed, the tubular mesh member 28 is subsequently bonded to the towed array modules. For example, the tubular mesh member 28 is bonded to the outer wall of the tube 18 by an epoxy adhesive. Various epoxy adhesives are suitable for underwater use. For example, a two part epoxy adhesive may be used. Additionally or alternatively, the tubular mesh member 28 is mechanically attached at one or both ends of the array 10.

Although in the above examples, the tubular mesh member 28 or tubular foam member 26 is manufactured separately to the array hose 18, alternatively the two parts may be manufactured in a single integrated process, using additive manufacturing for example.

Although an example in which the tubular mesh member 28 is manufactured using additive manufacturing techniques is described, alternative techniques may be used. For example, a laser may be used to cut away unwanted material from a polymer tube for example. In this case, material in the cell regions is cut away using a laser, leaving only the struts.

Although in the above description, the casing 22 is described in relation to a reelable array, the casing may be applied to various other types of towable arrays, which may be stored in various other ways on the vessel 12.

In the above description, a method of manufacturing a tubular mesh member 28 using an additive manufacturing process was described. Other example elements described herein may additionally or alternatively be formed using an additive manufacturing process.

Suitable additive manufacturing techniques in accordance with the present disclosure include, for example, Fused Deposition Modeling (FDM), Sterolithography (SLA), or Digital Light Processing (DLP), and other known processes. The additive manufacturing processes described herein may be used for forming elements using any suitable material. For example, the material may be a polymer, a mixture of polymer and some other material (for example an anti-biofouling agent) or any other suitable material that may be in solid, liquid, powder or any other suitable form or combinations thereof. These materials are examples of materials suitable for use in additive manufacturing processes which may be suitable for the fabrication of example elements described herein. The examples described herein may be formed from any suitable mixtures of materials. For example, a component may include multiple layers, segments, or parts that are formed using different materials, processes, and/or on different additive manufacturing machines. In this manner, components may be constructed which have different materials and material properties for meeting the demands of any particular application. In addition, it should be appreciated that in alternate embodiments, all or a portion of these components may be formed via machining, and/or any other suitable manufacturing process. Indeed, any suitable combination of materials and manufacturing methods may be used to form the components described herein.

Examples described herein not only include products or components as described herein, but also methods of manufacturing such products or components via additive manufacturing and computer software, firmware or hardware for controlling the manufacture of such products via additive manufacturing.

The structure of one or more parts of the product may be represented digitally in the form of a design file. A design file, or computer aided design (CAD) file, is a configuration file that encodes one or more of the surface or volumetric configuration of the shape of a product. That is, a design file represents the geometrical arrangement or shape of the product. Design files can take any now known or later developed file format as described previously. As described above, design files can be produced using modelling (e.g. CAD modelling) software and/or through scanning the surface of a product to measure the surface configuration of the product.

As described above, once obtained, a design file may be converted into a set of computer executable instructions that, once executed by a processer, cause the processor to control an additive manufacturing apparatus to produce a product according to the geometrical arrangement specified in the design file. The code or instructions may be translated between different formats, converted into a set of data signals and transmitted, received as a set of data signals and converted to code, stored, etc., as necessary. The instructions may be an input to the additive manufacturing system and may come from a part designer, an intellectual property (IP) provider, a design company, the operator or owner of the additive manufacturing system, or from other sources. An additive manufacturing system may execute the instructions to fabricate the product using any of the technologies or methods disclosed herein.

Design files or computer executable instructions may be stored in a (transitory or non-transitory) computer readable storage medium (e.g., memory, storage system, etc.) storing code, or computer readable instructions, representative of the product to be produced. As noted, the code or computer readable instructions defining the product that can be used to physically generate the object, upon execution of the code or instructions by an additive manufacturing system. For example, the instructions may include a precisely defined 3D model of the product and can be generated from any of a large variety of well-known computer aided design (CAD) software systems such as those described above. Alternatively, a model or prototype of the component may be scanned to determine the three-dimensional information of the component.

Accordingly, by controlling an additive manufacturing apparatus according to the computer executable instructions, the additive manufacturing apparatus can be instructed to print out one or more parts of the product. These can be printed either in assembled or unassembled form. For instance, different sections of the product may be printed separately (as a kit of unassembled parts) and then subsequently assembled. Alternatively, the different parts may be printed in assembled form.

In light of the above, embodiments include methods of manufacture via additive manufacturing. This includes the steps of obtaining a design file representing the product and instructing an additive manufacturing apparatus to manufacture the product in assembled or unassembled form according to the design file. The additive manufacturing apparatus may include a processor that is configured to automatically convert the design file into computer executable instructions for controlling the manufacture of the product. In these embodiments, the design file itself can automatically cause the production of the product once input into the additive manufacturing device. Accordingly, in this embodiment, the design file itself may be considered computer executable instructions that cause the additive manufacturing apparatus to manufacture the product. Alternatively, the design file may be converted into instructions by an external computing system, with the resulting computer executable instructions being provided to the additive manufacturing device.

Given the above, the design and manufacture of implementations of the subject matter and the operations described in this specification can be realized using digital electronic circuitry, or in computer software, firmware, or hardware, including the structures disclosed in this specification and their structural equivalents, or in combinations of one or more of them. For instance, hardware may include processors, microprocessors, electronic circuitry, electronic components, integrated circuits, etc. Implementations of the subject matter described in this specification can be realized using one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or other manufacturing technology.

While certain embodiments have been described, these embodiments have been presented by way of example only, and are not intended to limit the scope of the inventions. Indeed the novel methods and apparatus described herein may be embodied in a variety of other forms; furthermore, various omissions, substitutions and changes in the form of methods and apparatus described herein may be made without departing from the scope of the claims.

## Claims

1.  A casing (22) for a towable sonar apparatus (10), comprising:

    a tubular member (26), wherein the tubular member (26) comprises a foam member, wherein the tubular member (26) is configured to be radially contracted and expanded between a radially contracted state and a radially expanded state; and
    a first layer (24) around the tubular member (26), wherein the first layer is porous, and **characterised in that**;
    the tubular member (26) is configured to be in the radially expanded state when it is deployed in the water and wherein the foam member is compressible to less than half a deployed outer diameter.

2.  The casing (22) according to claim 1, wherein at least one of the first layer (24) and the tubular member (26) comprises an anti-biofouling material.

3.  The casing (22) according to any preceding claim, wherein the first layer (24) comprises a polymer material.

4.  The casing (22) according to any preceding claim, wherein the tubular member (26) comprises a polymer material.

5.  The casing (22) according to any preceding claim, wherein the outer diameter of the tubular member (26) in the radially expanded state is greater than 50mm.

6.  The casing (22) according to any preceding claim, wherein the tubular member (26) is configured to be collapsed down to a smaller diameter than when it is deployed in the water when wound in around a drum for storage.

7.  A towable sonar apparatus (10), comprising:

    at least one sensor;

a tube (18), wherein the at least one sensor is located inside the tube (18); and

the casing (22) of any preceding claim, wherein the casing (22) is provided around a portion of the tube (18) in which the at least one sensor is located.

8.  A vessel comprising the towable sonar apparatus (10) of claim 7.

9.  A kit-of-parts comprising:

    a tubular member (26), wherein the tubular member (26) comprises a foam member, wherein the tubular member (26) is configured to be radially contracted and expanded between a radially contracted state and a radially expanded state;

    a first layer (24), wherein the first layer (24) is porous and,

    wherein the tubular member (26) is configured to be in the radially expanded state when it is deployed in the water and wherein the foam member is compressible to less than half a deployed outer diameter.

10. The kit-of-parts according to claim 9, further comprising a towable sonar apparatus comprising at least one sensor and a tube (18), wherein the at least one sensor is located inside the tube (18).

11. A computer program comprising computer executable instructions that, when executed by a processor, cause the processor to control an additive manufacturing apparatus to manufacture the casing (22) of any of claims 1 to 6 or the kit of parts according to claim 9.

12. A method of manufacturing a casing (22) for a towable sonar array (10) according to claims 1-6 the method comprising:

    forming a tubular member (26), wherein the tubular member (26) comprises a foam member, wherein the tubular member (26) is configured to be radially contracted and expanded between a radially contracted state and a radially expanded state; and

    forming a first layer (24) around the tubular member (26), wherein the first layer (24) is porous,

    wherein the tubular member (26) is configured to be in the radially expanded state when it is deployed in the water and wherein the foam member is compressible to less than half a deployed outer diameter.

13. A method of manufacturing a towable sonar apparatus according to claim 7, comprising:

    manufacturing a casing (22) for a towable sonar array according to the method of claim 12; and locating the casing (22) around a portion of a tube (18) in which at least one sensor is located.

14. The method of manufacturing a casing (22) of claim 12, further comprising:

    obtaining an electronic file representing a geometry of the casing (22); and

    controlling an additive manufacturing apparatus to manufacture, over one or more additive manufacturing steps, the casing (22) according to the geometry specified in the electronic file.

**Patentansprüche**

1.  Gehäuse (22) für eine schleppbare Sonareinrichtung (10), umfassend:

    ein rohrförmiges Element (26), wobei das rohrförmige Element (26) ein Schaumstoffelement umfasst,

    wobei das rohrförmige Element (26) konfiguriert ist, um radial zwischen einem radial zusammengezogenen Zustand und einem radial ausgedehnten Zustand zusammengezogen und ausgedehnt zu werden; und

    eine erste Schicht (24) um das rohrförmige Element (26), wobei die erste Schicht porös ist, und **dadurch gekennzeichnet, dass**;

    das rohrförmige Element (26) konfiguriert ist, um im radial ausgedehnten Zustand zu sein, wenn es im Wasser eingesetzt wird, und wobei das Schaumstoffelement auf weniger als die Hälfte eines eingesetzten Außendurchmessers komprimierbar ist.

2.  Gehäuse (22) nach Anspruch 1, wobei mindestens eines von der ersten Schicht (24) und dem rohrförmigen Element (26) ein Anti-Biofouling-Material umfasst.

3.  Gehäuse (22) nach einem vorstehenden Anspruch, wobei die erste Schicht (24) ein Polymermaterial umfasst.

4.  Gehäuse (22) nach einem vorstehenden Anspruch, wobei das rohrförmige Element (26) ein Polymermaterial umfasst.

5.  Gehäuse (22) nach einem vorstehenden Anspruch, wobei der Außendurchmesser des rohrförmigen Elements (26) im radial ausgedehnten Zustand größer als 50mm ist.

**6.** Gehäuse (22) nach einem vorstehenden Anspruch, wobei das rohrförmige Element (26) konfiguriert ist, um auf einen kleineren Durchmesser zusammengeklappt zu werden, als wenn es im Wasser eingesetzt wird, wenn es zur Aufbewahrung um eine Trommel gewickelt wird.

**7.** Schleppbare Sonareinrichtung (10), umfassend:

mindestens einen Sensor;
ein Rohr (18), wobei sich der mindestens eine Sensor innerhalb des Rohrs (18) befindet; und das Gehäuse (22) nach einem vorstehenden Anspruch, wobei das Gehäuse (22) um einen Abschnitt des Rohres (18) bereitgestellt ist, in dem sich der mindestens eine Sensor befindet.

**8.** Schiff, umfassend die schleppbare Sonareinrichtung (10) nach Anspruch 7.

**9.** Teilesatz, umfassend:

ein rohrförmiges Element (26), wobei das rohrförmige Element (26) ein Schaumstoffelement umfasst, wobei das rohrförmige Element (26) konfiguriert ist, um radial zwischen einem radial zusammengezogenen Zustand und einem radial ausgedehnten Zustand zusammengezogen und ausgedehnt zu werden;
eine erste Schicht (24), wobei die erste Schicht (24) porös ist, und,
wobei das rohrförmige Element (26) konfiguriert ist, um im radial ausgedehnten Zustand zu sein, wenn es im Wasser eingesetzt wird, und wobei das Schaumstoffelement auf weniger als die Hälfte eines eingesetzten Außendurchmessers komprimierbar ist.

**10.** Teilesatz nach Anspruch 9, weiter umfassend eine schleppbare Sonareinrichtung, die mindestens einen Sensor und ein Rohr (18) umfasst, wobei sich der mindestens eine Sensor innerhalb des Rohres (18) befindet.

**11.** Computerprogramm, umfassend computerausführbaren Anweisungen, die, wenn sie von einem Prozessor ausgeführt werden, den Prozessor veranlassen, eine additive Herstellungseinrichtung zu steuern, um das Gehäuse (22) nach einem der Ansprüche 1 bis 6 oder den Teilesatz nach Anspruch 9 herzustellen.

**12.** Verfahren zur Herstellung eines Gehäuses (22) für eine schleppbare Sonaranordnung (10) nach den Ansprüchen 1-6, wobei das Verfahren umfasst:

Bilden eines rohrförmigen Elements (26), wobei das rohrförmige Element (26) ein Schaumstoffelement umfasst, wobei das rohrförmige Element (26) konfiguriert ist, um radial zwischen einem radial zusammengezogenen Zustand und einem radial ausgedehnten Zustand zusammengezogen und ausgedehnt zu werden; und
Bilden einer ersten Schicht (24) um das rohrförmige Element (26), wobei die erste Schicht (24) porös ist,
wobei das rohrförmige Element (26) konfiguriert ist, um im radial ausgedehnten Zustand zu sein, wenn es im Wasser eingesetzt wird, und wobei das Schaumstoffelement auf weniger als die Hälfte eines eingesetzten Außendurchmessers komprimierbar ist.

**13.** Verfahren zur Herstellung einer schleppbaren Sonareinrichtung nach Anspruch 7, umfassend:

Herstellen eines Gehäuses (22) für eine schleppbare Sonaranordnung nach dem Verfahren nach Anspruch 12; und
Lokalisieren des Gehäuses (22) um einen Abschnitt eines Rohres (18) herum, in dem sich mindestens ein Sensor befindet.

**14.** Verfahren zur Herstellung eines Gehäuses (22) nach Anspruch 12, weiter umfassend:

Erhalten einer elektronischen Datei, die eine Geometrie des Gehäuses (22) darstellt; und
Steuern einer additiven Herstellungseinrichtung, um in einem oder mehreren additiven Fertigungsschritten das Gehäuse (22) gemäß der in der elektronischen Datei spezifizierten Geometrie herzustellen.

**Revendications**

**1.** Logement (22) pour appareil sonar remorquable (10), comprenant :

un élément tubulaire (26), dans lequel l'élément tubulaire (26) comprend un élément en mousse, dans lequel l'élément tubulaire (26) est configuré pour être contracté et déployé radialement entre un état radialement contracté et un état radialement déployé ; et
une première couche (24) autour de l'élément tubulaire (26), dans lequel la première couche est poreuse, et **caractérisée en ce que** ;
l'élément tubulaire (26) est configuré pour être dans l'état radialement déployé lorsqu'il est déployé dans l'eau, et dans lequel l'élément en mousse est compressible jusqu'à moins de la moitié d'un diamètre extérieur déployé.

2. Logement (22) selon la revendication 1, dans lequel au moins un élément parmi la première couche (24) et l'élément tubulaire (26) comprend un matériau anti-encrassement biologique.

3. Logement (22) selon une quelconque revendication précédente, dans lequel la première couche (24) comprend un matériau polymère.

4. Logement (22) selon une quelconque revendication précédente, dans lequel l'élément tubulaire (26) comprend un matériau polymère.

5. Logement (22) selon une quelconque revendication précédente, dans lequel le diamètre extérieur de l'élément tubulaire (26) dans l'état radialement déployé est supérieur à 50 mm.

6. Logement (22) selon une quelconque revendication précédente, dans lequel l'élément tubulaire (26) est configuré pour être aplati jusqu'à un diamètre plus petit que lorsqu'il est déployé dans l'eau, lorsqu'il est enroulé autour d'un tambour pour le stockage.

7. Appareil sonar remorquable (10), comprenant :

   au moins un capteur ;
   un tube (18), dans lequel l'au moins un capteur est positionné à l'intérieur du tube (18) ; et le logement (22) selon une quelconque revendication précédente, dans lequel le logement (22) est prévu autour d'une partie du tube (18) dans lequel est positionné au moins un capteur.

8. Bateau, comprenant l'appareil sonar remorquable (10) de la revendication 7.

9. Ensemble de pièces, comprenant :

   un élément tubulaire (26), dans lequel l'élément tubulaire (26) comprend un élément en mousse, dans lequel l'élément tubulaire (26) est configuré pour être contracté et déployé radialement entre un état radialement contracté et un état radialement déployé ;
   une première couche (24), dans lequel la première couche (24) est poreuse, et
   dans lequel l'élément tubulaire (26) est configuré pour être dans l'état radialement déployé lorsqu'il est déployé dans l'eau, et dans lequel l'élément en mousse est compressible jusqu'à moins de la moitié d'un diamètre extérieur déployé.

10. Kit de pièces selon la revendication 9, comprenant en outre un appareil sonar remorquable comprenant au moins un capteur et un tube (18), dans lequel l'au moins un capteur est positionné à l'intérieur du tube (18).

11. Programme informatique, comprenant des instructions exécutables par ordinateur qui, lorsqu'elles sont exécutées par un processeur, amènent le processeur à commander un appareil de fabrication additive pour fabriquer le logement (22) de l'une quelconque des revendications 1 à 6 ou le kit de pièces selon la revendication 9.

12. Procédé de fabrication d'un logement (22) pour un réseau sonar remorquable (10) selon les revendications 1 à 6, le procédé comprenant :

    la formation d'un élément tubulaire (26), dans lequel l'élément tubulaire (26) comprend un élément en mousse, dans lequel l'élément tubulaire (26) est configuré pour être contracté et déployé radialement entre un état radialement contracté et un état radialement déployé ; et
    la formation d'une première couche (24) autour de l'élément tubulaire (26), dans lequel la première couche (24) est poreuse,
    dans lequel l'élément tubulaire (26) est configuré pour être dans l'état radialement déployé lorsqu'il est déployé dans l'eau, et dans lequel l'élément en mousse est compressible jusqu'à moins de la moitié d'un diamètre extérieur déployé.

13. Procédé de fabrication d'un appareil sonar remorquable selon la revendication 7, comprenant :

    la fabrication d'un logement (22) pour un réseau sonar remorquable selon le procédé de la revendication 12 ; et
    le positionnement du logement (22) autour d'une partie d'un tube (18) dans lequel est positionné au moins un capteur.

14. Procédé de fabrication d'un logement (22) de la revendication 12, comprenant en outre :

    l'obtention d'un fichier électronique représentant une géométrie du logement (22) ; et
    la commande d'un appareil de fabrication additive pour fabriquer, durant une ou plusieurs étapes de fabrication additive, le logement (22) selon la géométrie spécifiée dans le fichier électronique.

EP 4 109 140 B1

Figure 1(a)

17

101

104

102

14

100

103

105

10

Figure 1(b)

Turbulent flow

Turbulent flow

18

Increased
stand-off

sensor

sensor

22

10

26

Figure 2

Figure 3(a)

22

26

sensor

22

24

10

Figure 3(b)

22

18

24

Figure 4(a)

Figure 4(b)

sensor

| Form the tubular member | S501 |

| Form the outer layer around the tubular member | S502 |

Figure 5

Figure 6(a)

Figure 6(b)

28

Longitudinal

Circumferential

32

Figure 6(c)

Circumferential

B

A

C

43

38

32

28

Figure 6(d)

Figure 6(e)

Longitudinal

Figure 7(a)

22

28

sensor

22

24

10

22

Figure 7(b)

28

18

24

Figure 8(a)

Figure 8(b)

sensor

Form the tubular member     S901

Form the outer layer
around the tubular member     S902

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2108892 A
- EP 2279435 B1
- US 2019004196 A1
- US 2007201307 A1
- WO 2014053983 A1
- US 8644109 B2
- NO 339390 B1
- US 2708742 A